# EUROPÄISCHE PATENTSCHRIFT

(11) **EP 2 887 170 B1**
(45) Veröffentlichungstag und Bekanntmachung des Hinweises auf die Patenterteilung: **06.05.2020**
(21) Anmeldenummer: 14003814.2
(22) Anmeldetag: 12.11.2014
(51) Int. Cl.: G05D 23/19, G05D 23/13

(54) **Thermostat-Mischventil**
Thermostatic mixer valve
Mitigeur thermostatique

(30) Priorität: 15.11.2013 DE 102013019074
(43) Veröffentlichungstag der Anmeldung: 24.06.2015
(73) Patentinhaber: Grohe AG, 58675 Hemer (DE)
(72) Erfinder: Huck, Kai, 58300 Wetter (DE); Schwartpaul, Tanja, 58809 Neuenrade (DE); Mielke, Achim, 32457 Porta Westfalica (DE)

(56) Entgegenhaltungen:
- EP-A2- 0 387 471
- DE-A1- 1 934 658
- DE-A1-102008 058 515
- DE-C2- 4 447 893
- US-A- 5 058 804

## Beschreibung

Die Erfindung betrifft ein Thermostat-Mischventil zum Mischen von Kaltwasser und Warmwasser sowie zur Einstellung der Mischwassertemperatur nach dem Oberbegriff des Patentanspruches 1.

Der Aufbau sowie die Betriebsweise eines solchen Thermostat-Mischventils ist zum Beispiel aus der DE 10 2006 032 018 A1 bekannt, wonach das Thermostat-Mischventil zur Einstellung der Mischwassertemperatur in eine Sanitärarmatur, etwa in eine Dusche, eingebaut werden kann.

Aus der DE 10 2008 058 515 A1 ist ein gattungsgemäßes Thermostat-Mischventil bekannt, bei dem die Einstellung der Mischwassertemperatur nicht mehr manuell über einen Bedienknebel vom Benutzer vorgegeben wird, sondern vielmehr das Thermostat-Mischventil ferngesteuert vom Benutzer ansteuerbar ist. Hierzu weist das Thermostat-Mischventil einen Elektromotor auf, der über eine Getriebestufe auf einen hubverstellbaren Ventilkörper einwirkt, mit dem die Größe von Warmwasser- und Kaltwasserregelspalten über einen Stellbereich variierbar ist, und zwar in Abhängigkeit von einem benutzerseitig eingestellten Mischwassertemperatur-Sollwert.

In der DE 10 2008 058 515 A1 ist dem Elektromotor ein Sensorelement zur Erfassung zumindest einer Stellposition der Thermostat-Mischventiles zugeordnet. Das Sensorelement ist ein Schalter, der mit einem, mit dem Elektromotor drehgekoppelten Nockenring zusammenwirkt. Dieser weist zwei Nocken unterschiedlicher Größe auf, mit deren Hilfe der Stellbereich des Thermostat-Mischventils festlegbar ist und/oder eine Kalibrier-Stellposition zur Kalibrierung des Mischventils erfassbar ist.

Für eine betriebssichere Erfassung des Stellbereiches des Mischventils ist es in der DE 10 2008 058 515 A1 erforderlich, dass der beim Stellvorgang zurückgelegte Drehwinkel des Elektromotors wesentlich kleiner als eine Umdrehung, das heißt kleiner als 360°, ausgelegt ist. Dadurch ist jedoch der verfügbare Stellbereich des Thermostat-Mischventiles stark reduziert. Zudem ist die Anordnung des Schalters und des Nockenrings in dem Thermostat-Mischventil sowohl bauraum- als auch bauteilintensiv.

In der DE 10 2008 058 515 A1 ist ferner die Antriebsspindel des Elektromotors mit einer bauraumintensiv ausgeführten, im Querschnitt in etwa tassenförmig gestalteten Reguliermutter über eine Steckverzahnung drehfest gekoppelt. Die tassenförmige Reguliermutter weist ein Innengewinde auf, das mit einem Außengewinde der Überlasteinheit zusammenwirkt. Bei einem Stellvorgang wird die Reguliermutter in Drehung versetzt, wodurch sich eine entsprechende Hubbewegung der Überlasteinheit ergibt.

Schließlich ist aus der US 5,058,804 A ein automatisches Wasserversorgungsgerät mit einem Kaltwasser-/Warmwasser-Mischventil zum Mischen von Kaltwasser, welches durch eine Kaltwasserversorgungsleitung zugeführt wird, und von Warmwasser, welches durch eine Wasserdurchlauferhitzereinheit durch ein Warmwasserzuführrohr zugeleitet wird, bekannt. Das Warmwasserversorgungsgerät weist ferner eine Wassertemperatur-Einstelleinheit zum Einstellen einer Temperatur des Mischwassers, ein Strömungsmengen-/Richtungssteuerungs-Ventil zum Regeln der Strömungsmenge des Mischwassers, und eine elektrische Betätigungseinrichtung zum Antreiben des Strömungsmengen-/Richtungssteuerungs-Ventils auf. Bei dem Warmwasserversorungsgerät ist die Strömungsmengen-Begrenzungseinrichtung so ausgebildet, dass sie eine Störung oder ein Unvermögen der Wasserdurchlauferhitzereinheit zur Zuführung des Warmwassers bei einer bestimmten Strömungsmenge signalisiert. Ferner ist eine Regeleinrichtung zum Ansteuern der elektrischen Betätigungseinrichtung zum Antreiben des Strömungsmengen-/Richtungssteuerungs-Ventils als Reaktion auf ein Signal von der Strömungsmengen-Begrenzungseinrichtung vorgesehen, um zu verhindern, dass sich die Temperatur des Mischwassers in Folge der Störung oder des Unvermögens der Wasserdurchlauferhitzereinrichtung vermindert.

Die DE 1 934 658 A1 offenbart eine Mischbatterie für Kalt- und Warmwasser mit zwei elektrisch gesteuerten Ventilen, wobei dem auf einer Warmwasserseite angeordneten Ventil ein Mischthermostat vorgeschaltet ist. Die Ventile weisen jeweils Endschalter auf, mit denen sie in Endstellungen ausschaltbar sind.

Die Aufgabe der Erfindung besteht darin, ein Thermostat-Mischventil bereitzustellen, dessen verfügbarer Stellbereich mit einfachen Mitteln sowie unter Reduzierung des Bauraum- und Bauteilbedarfs vergrößert ist.

Die Aufgabe ist durch die Merkmale des Patentanspruches 1 gelöst. Bevorzugte Weiterbildungen der Erfindung sind in den Unteransprüchen offenbart.

Die Erfindung beruht auf dem Sachverhalt, dass in der DE 10 2008 058 515 A1 die Erfassung der Drehposition des Elektromotors sowie die Festlegung des ansteuerbaren Stellbereiches des Thermostat-Mischventils auf einen Elektromotor-Drehwinkel von weit unter 360° begrenzt ist. Vor diesem Hintergrund weist gemäß dem Kennzeichnungsteil des Patentanspruches 1 die zwischen dem Elektromotor und dem Ventilkörper geschaltete Getriebestufe ein drehfest angeordnetes, linear verstellbares Linearhubelement auf. Das Linearhubelement ist im Kräftepfad der Getriebestufe eingeschaltet und wirkt als ein Signalgeber mit dem Sensorelement zusammen, um die Stellposition des Elektromotors zu erfassen. Auf diese Weise erfolgt die Positionserfassung nicht mehr über einen Nockenring mit zugeordnetem Schalter, sondern vielmehr durch das Linearhubelement. Dadurch können vom Sensorelement Stellpositionen unabhängig von dem während des Stellvorgangs zurückgelegten Drehwinkels des Elektromotors erfasst werden. Mit der erfindungsgemäßen Anordnung kann der Stellbereich des Mischventils ohne Weiteres so ausgelegt werden, dass er sich zwischen der Vorlauftemperaturen des Kaltwassers und des Warmwassers erstreckt.

Die vom Sensorelement erfassbaren Stellpositionen sind beispielhaft eine untere Stellposition sowie eine obere Stellposition, die den verfügbaren, ansteuerbaren Stellbereich des Thermostat-Mischventils definieren. Zudem kann das Sensorelement eine zusätzliche Kalibrier-Stellposition erfassen, die in etwa mittig zwischen der unteren sowie oberen Stellposition liegt. Bei einem vollständigen Durchfahren des Stellbereiches kann der zurückgelegte Drehwinkel des Elektromotors größer als 360° sein.

In einer technischen Realisierung kann die Getriebestufe des Thermostat-Mischventiles als Eingangselement eine Antriebsspindel des Elektromotors aufweisen. Diese ist in trieblicher Verbindung mit dem Linearhubelement. Eine besonders einfache triebliche Verbindung ergibt sich, wenn die Antriebsspindel ein Außengewinde aufweist, das mit einem radial äußeren Innengewinde des Linearhubelementes in Eingriff ist. Das Liniearhubelement ist bevorzugt koaxial zur Antriebsspindel des Elektromotors angeordnet. In einer weiteren Ausgestaltung kann das Linearhubelement das Ausgangselement der Getriebestufe bilden, das mittelbar oder unmittelbar auf den Ventilkörper einwirkt. Bevorzugt ist es, wenn das Linearhubelement nicht unmittelbar, sondern mittelbar über eine Überlasteinheit und ein Thermostatelement auf den Ventilkörper einwirkt. Die Überlasteinheit ist bei übermäßig großer Kraftbeaufschlagung elastisch nachgiebig. Mit Hilfe des Thermostatelementes werden Temperaturschwankungen in der Mischwassertemperatur dadurch ausgeglichen, dass dessen Baulänge in Abhängigkeit von den Temperaturschwankungen variierbar ist, wodurch die Größe der Kaltwasser- und Warmwasserregelspalte entsprechend verstellt wird. Der Aufbau und die Funktionsweise des Thermostatelements kann identische mit dem in der DE 10 2008 058 515 A1 offenbarten Thermostaten sein.

In einer bauraumgünstigen Ausführungsform kann die Überlasteinheit eine zylindrische Hülse sei. Diese ist in einer Axialrichtung in einer Bohrung eines Ventilgehäuses (das heißt das Kopfstück) linear verstellbar gelagert. Zudem kann die Hülse eine, dem Linearhubelement zugewandte Stirnwand aufweisen, mit der das Linearhubelement in Druckanlage bringbar ist. Auf der davon abgewandten Stirnseite ist ein Druckstück elastisch nachgiebig mittels einer Rückstellfeder gelagert. Das Druckstück der Überlasteinheit ist in Anlage mit dem Thermostatelement, das wiederum mit dem Ventilkörper bewegungskoppelt ist.

Bei einer Hubverstellung des Linearhubelementes wird sowohl die Überlasteinheit als auch das, in der Kraftflussrichtung betrachtet, nachgeschaltete Thermostatelement mit dem bewegungsgekoppelten Ventilkörper hubverstellt, mit dem die Größe der Kaltwasser- und Warmwasserregelspalte in Abhängigkeit vom Hubweg einstellbar ist.

Die Überlasteinheit, das Thermostatelement sowie der Ventilkörper bilden zusammen mit dem oben erwähnten Ventilgehäuse (besteht aus dem Kopfstück und einem Heißwassersitz) bevorzugt eine Kartusche. Die Kartusche ist als eine Vormontageeinheit mit dem Elektromotor sowie dem Linearhubelement trieblich verbindbar.

In einer bevorzugten Ausführungsform kann das Linearhubelement einen Signalgeber aufweisen, etwa ein radial nach außen abragendes Fähnchen, das mit dem Sensorelement zusammenwirkt. Das Fähnchen kann Schlitze aufweisen, die jeweils vorgegebenen Stellpositionen entsprechen. Demgegenüber kann das Sensorelement als ein optischer Sensor mit Lichtquelle gehäusefest angeordnet sein und die Lage der Schlitze erfassen.

Die Steuereinheit zur Ansteuerung des Elektromotors kann als Regler in einem Regelkreis zur Regelung der Ist- Mischwassertemperatur auf die benutzerseitig vorgegebene Soll-Mischwassertemperatur eingebunden sein. Hierzu kann der Regelkreis einen Temperatursensor aufweisen, der in einer Mischwasserkammer des Thermostat-Mischventils angeordnet ist und in Signalverbindung mit der Steuereinheit des Elektromotors ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Schnittdarstellung das Thermostat-Mischventil in der Einbaulage;
- Fig. 2: eine Vormontageeinheit bestehend aus dem Elektromotor, der Linearhubeinrichtung sowie einer angedeuteten Steuereinheit; und
- Fig. 3: in einer vergrößerten Teilschnittdarstellung das in dem Mischventil eingebaute Linearhubelement mit angedeutetem Mischventil-Stellbereich Δy.

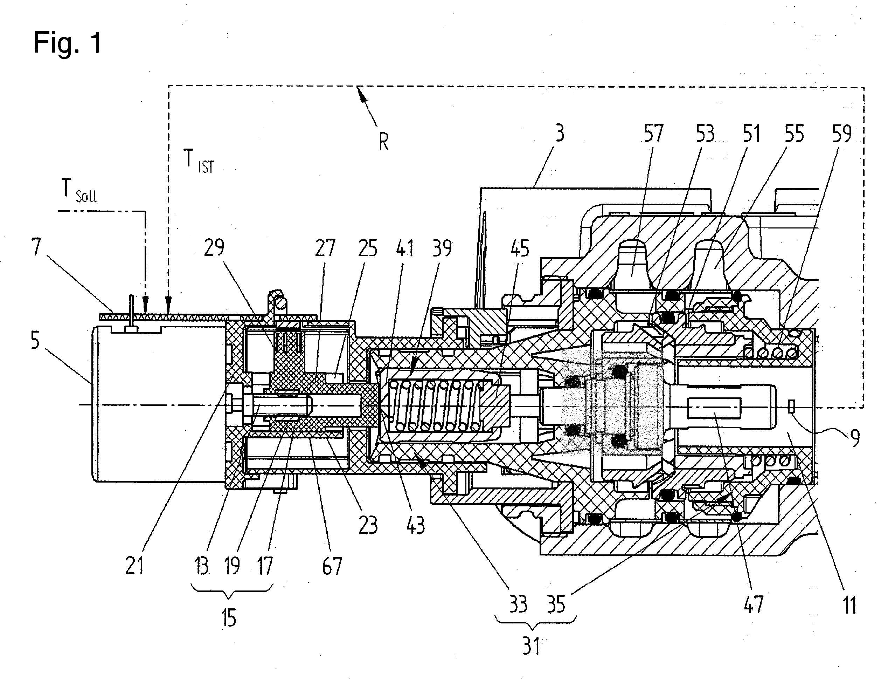

In der Fig. 1 ist das Thermostat-Mischventil 1 in einer Einbaulage gezeigt, und zwar in einer Sanitärarmatur 3 etwa für eine Dusche. Das Thermostat-Mischventil 1 weist vorliegend keinen Betätigungsknebel für eine manuelle Einstellung der Mischwassertemperatur auf, sondern vielmehr einen Elektromotor 5, dessen Steuereinheit 7 in berührungsloser Signalverbindung (in der Fig. 1 mit gestrichelten Pfeilen dargestellt) mit einer, vom Benutzer betätigbaren Fernsteuereinheit (in den Figuren nicht dargestellt) ist. Mittels der Fernsteuereinheit leiten der Benutzer eine Soll-Mischwassertemperatur Tₛₒₗₗ zur Steuereinheit 7. Die Steuereinheit 7 ist zusammen mit dem Elektromotor 5 und dem in der Fig. 1 angedeuteten, in der Mischwasserkammer 11 angeordneten Temperatursensor 9 in einem Regelkreis R eingebunden. In Abhängigkeit von der benutzerseitig vorgegebenen Soll-Mischwassertemperatur Tₛₒₗₗ erfolgt über den Regelkreis R eine Angleichung der vom Temperatursensor 9 erfassten Ist-Mischwassertemperatur Tᵢₛₜ an die benutzerseitig vorgegebene Soll-Mischwassertemperatur Tₛₒₗₗ. Die Steuereinheit 7. generiert hierzu ein Stellsignal, mit dem der Elektromotor 5 zur Verstellung des Mischventiles 1 betätigbar ist.

Der Elektromotor 5 weist eine Antriebsspindel 13 auf, die ein Eingangselement einer Getriebestufe 15 bildet. Das Ausgangselement der Getriebestufe 15 bildet ein hülsenförmiges Linearhubelement 17, an dessen Innenumfang ein Innengewinde vorgesehen ist, das in Gewindeeingriff 19 mit einem korrespondierenden Außengewinde der Antriebsspindel 13 ist. Zur Halterung der in der Fig. 1 platinenartig angedeuteten Steuereinheit 7 sowie des Linearhubelementes 17 weist der Elektromotor 5 eine Tragplatte 21 mit einem hülsenförmigen Lagerfortsatz 23 auf. Radial innerhalb des hülsenförmigen Lagerfortsatzes 23 ist das Linearhubelement 17 linear verschiebbar, jedoch verdrehsicher gelagert. Für die drehfeste Lagerung weist der hülsenförmige Lagerfortsatz 23 eine schlitzförmige Axialführung 25 auf, durch die ein Axialsteg 27 des Linearhubelements 17 mit daran anschließendem Fähnchen 29 geführt ist.

In der Fig. 1 weist das Thermostat-Mischventil 1 zudem eine Thermostat-Kartusche 31 auf, dessen Gehäuse durch ein Kopfstück 33 sowie einen sogenannten Heißwassersitz 35 gebildet ist. Die Thermostat-Kartusche 31 weist eine in Richtung auf das Linearhubelement 17 offene Ausnehmung 37 auf, in der eine Überlasteinheit 39 axial verschiebbar angeordnet ist. Die hülsenförmige Überlasteinheit 39 ist an ihrer, dem Linearhubelement 17 zugewandten Seite mit einer Stirnwand 41 ausgebildet, die während des Stellvorganges in Anlage mit der Stirnseite 43 des Linearhubelementes 17 ist. An ihrer davon abgewandten Seite weist die Überlasteinheit 39 ein elastisch nachgiebig gelagertes Druckstück 45 auf, das mit einem Thermostatelement 47 in Anlage ist. Das Thermostatelement 47 bildet zusammen mit einem radial äußeren Ventilkörper 49 eine bewegungsgekoppelte Einheit, bei der der Ventilkörper 49 durch axiale Verstellung die Größe der Warmwasser- und Kaltwasserregelspalte 51, 53 variieren kann. Die Regelspalte 51, 53 sind in an sich bekannter Weise mit Warm- und Kaltwasserzuleitungen 55, 57 strömungstechnisch in Verbindung. Das durch die Regelspalte 51, 53 strömende Kalt- und Warmwasser wird in der nachgeschalteten Mischwasserkammer 11 durchmischt und zum Brausekopf weitergeleitet.

Gemäß der Fig. 1 ist der in der Kartusche 31 gelagerte Bauteilverbund, bestehend aus dem Thermostatelement 47, dem Ventilkörper 49 sowie der Überlasteinheit 39, mittels einer Vorspannfeder 59 in Richtung auf das Linearhubelement 17 vorgespannt.

Bei einem Stellvorgang wird die Antriebsspindel 13 des Elektromotors 5 in Drehung versetzt, wodurch sich das Linearhubelement 17 um einen Stellweg linear verschiebt. Auf diese Weise kann der Bauteilverbund, bestehend aus der Überlasteinheit 39, dem Thermostatelement 47 und dem Ventilkörper 49, entgegen der Federkraft der Vorspannfeder 59 innerhalb der Kartusche 31 axial verlagert werden. Dadurch werden die Regelspalte 51, 53 für das Kaltwasser und das Warmwasser entsprechend eingestellt.

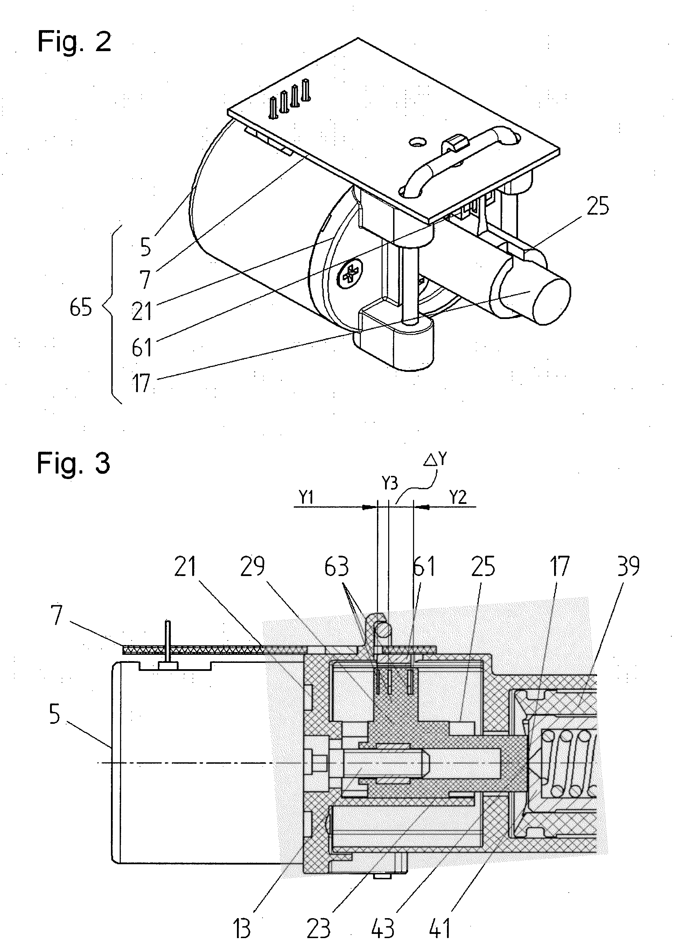

Gemäß der Fig. 3 wird der Stellbereich Δy des Thermostat-Mischventils 1 mittels eines Sensorelementes 61 vorgegeben. Vorliegend ist das Sensorelement 61 ein optischer Sensor, der mit drei Schlitzen 63 am Fähnchen 29 zusammenwirkt. Die beiden in der Axialrichtung äußeren Schlitze 63 entsprechen jeweils eine untere Stellposition y₁ und eine obere Stellposition y₂, die den verfügbaren Stellbereich Δy des Thermostat-Mischventils 1 definieren. Der mittlere Schlitz 63 kann dagegen beispielhaft eine Kalibrier-Stellposition des Elektromotors 5 darstellen.

In der Fig. 2 ist der Elektromotor 5 sowie das Linearhubelement 17 und der optische Sensor 61 als eine Vormontageeinheit 65 dargestellt. Wie bereits erwähnt, ist das Linearhubelement 17 zusammen mit dem optischen Sensor 61 an einer Tragplatte 21 des Elektromotors 5 gelagert. Die Verbindung der Vormontageeinheit 65 mit der Thermostat-Kartusche 31 erfolgt über ein hülsenförmiges Adapterteil 67 (Fig. 1), an dessen gegenüberliegenden Stirnseiten jeweils die Thermostat-Kartusche 31 und die Vormontageeinheit 65 einsteckbar ist.

**Bezugszeichenliste**

| | | | |
|---|---|---|---|
| 1 | Thermostat-Mischventil | 51, 53 | Regelspalte |
| 3 | Sanitärarmatur | 55, 57 | Wasser-Zuleitungen |
| 5 | Elektromotor | 59 | Vorspannfeder |
| 7 | Steuereinheit | 61 | Sensorelement |
| 9 | Temperatursensor | 63 | Schlitze |
| 11 | Mischwasserkammer | 65 | Vormontageeinheit |
| 13 | Antriebsspindel | 67 | Adapter |
| 15 | Getriebestufe | R | Regelkreis |
| 17 | Linearhubelement | | |
| 19 | Gewindeeingriff | | |
| 21 | Tragplatte | | |
| 23 | hülsenförmiger Lagerfortsatz | | |
| 25 | Axialschlitz | | |
| 27 | Axialsteg | | |
| 29 | Fähnchen | | |
| 31 | Thermostat-Kartusche | | |
| 33 | Kopfstück | | |
| 35 | Heißwassersitz | | |
| 37 | Ausnehmung | | |
| 39 | Überlasteinheit | | |
| 41 | Stirnwand | | |
| 43 | Stirnseite | | |
| 45 | Druckstück | | |
| 47 | Thermostatelement | | |
| 49 | Ventilkörper | | |

## Patentansprüche

1. Thermostat-Mischventil zum Mischen von Kaltwasser und Warmwasser und zur Einstellung einer Mischwassertemperatur (Tᵢₛₜ), mit einem von einer Steuereinheit (7) ansteuerbaren Elektromotor (5), der über eine Getriebestufe (15) auf einen über einen Stellbereich (Δy) hubverstellbaren Ventilkörper einwirkt, mit dem das Mischungsverhältnis zwischen Warm- und Kaltwasser in Abhängigkeit von einer benutzerseitig vorgebbaren Soll-Mischwassertemperatur (Tₛₒₗₗ) variierbar ist, und mit einem Sensorelement (61) zur Erfassung zumindest einer Stellposition (y₁, y₂, y₃) im Stellbereich (Δy) des Thermostat-Mischventils (1), **dadurch gekennzeichnet, dass** die Getriebestufe (15) ein zwischen dem Elektromotor (5) und dem Ventilkörper (49) vorgesehenes, drehfest angeordnetes, linear verstellbares Linearhubelement (17) aufweist, und dass das Sensorelement (61) zur Erfassung der Stellposition (y₁, y₂, y₃) mit dem Linearhubelement (17) zusammenwirkt.

2. Thermostat-Mischventil nach Anspruch 1, **dadurch gekennzeichnet, dass** die vom Sensorelement (61) erfassbaren Stellpositionen (y₁, y₂, y₃) eine untere Stellposition (y₁) und eine obere Stellposition (y₂) sind, die den Stellbereich (Δy) des Thermostat-Mischventils (1) definieren.

3. Thermostat-Mischventil nach Anspruch 1 oder 2, **dadurch gekennzeichnet, dass** die Größe des Stellbereichs (Δy) des Thermostat-Mischventils (1) unabhängig vom, während des Stellvorgangs zurückgelegten Elektromotor-Drehwinkel ist, und dass beim vollständigen Durchfahren des Stellbereichs (Δy) der zurückgelegte Drehwinkel des Elektromotors (5) größer als 360° ist.

4. Thermostat-Mischventil nach einem der Ansprüche 1 bis 3, **dadurch gekennzeichnet, dass** die Getriebestufe (15) als ein Eingangselement eine Antriebsspindel (13) des Elektromotors (5) aufweist, die in trieblicher Verbindung mit dem Linearhubelement (17) ist, und dass zur Bildung der trieblichen Verbindung insbesondere die Antriebsspindel (13) ein Außengewinde aufweist, das mit einem radial äußeren Innengewinde des Linearhubelements (17) in Eingriff (19) ist.

5. Thermostat-Mischventil nach einem der Ansprüche 1 bis 4, **dadurch gekennzeichnet, dass** das Linearhubelement (17) das Ausgangselement der Getriebestufe (15) ist, das insbesondere mittelbar auf den Ventilkörper (49) einwirkt.

6. Thermostat-Mischventil nach einem der vorhergehenden Ansprüche, **dadurch gekennzeichnet, dass** in der Kraftflussrichtung nach dem Linearhubelement (17) in Reihenschaltung eine Überlasteinheit (39), die bei übermäßig großer Kraftbeaufschlagung elastisch nachgiebig ist, und ein Thermostatelement (47), insbesondere ein Dehnstoffelement, folgt, das mit dem Ventilkörper (49) bewegungsgekoppelt ist.

7. Thermostat-Mischventil nach Anspruch 6, **dadurch gekennzeichnet, dass** die Überlasteinheit (39) zylindrisch mit einer, dem Linearhubelement (17) zugewandten Stirnwand (41) ausgebildet ist, mit der das Linearhubelement (17) in Anlage bringbar ist.

8. Thermostat-Mischventil nach Anspruch 6 oder 7, **dadurch gekennzeichnet, dass** die Überlasteinheit (39), das Thermostatelement (47) und der Ventilkörper (49) in einem Gehäuse (31) zusammengefasst sind und eine erste Vormontageeinheit bilden, und dass der Elektromotor (5) mit der Steuereinheit (7) und dem Linearhubelement (17) eine zweite Vormontageeinheit (65) bilden, die im Zusammenbauzustand trieblich mit der ersten Vormontageeinheit verbunden ist.

9. Thermostat-Mischventil nach einem der vorhergehenden Ansprüche, **dadurch gekennzeichnet, dass** das Linearhubelement (17) einen Signalgeber, etwa ein radial abragendes Fähnchen (29), aufweist, das mit dem Sensorelement (61) zusammenwirkt.

10. Thermostat-Mischventil nach einem der vorhergehenden Ansprüche, **dadurch gekennzeichnet, dass** die Steuereinheit (7) und der Elektromotor (5) des Thermostat-Mischventils (1) in einem Regelkreis (R) zur Regelung der Ist-Mischwassertemperatur (Tᵢₛₜ) auf die benutzerseitig vorgegebene Soll-Mischwassertemperatur (Tₛₒₗₗ) eingebunden sind.

## Claims

1. A thermostatic mixer valve for mixing cold water and hot water and for adjusting a mixed water temperature (Tᵢₛₜ), having an electric motor (5) which can be actuated by a control unit (7) and which acts via a gear stage (15) on a valve body which is stroke adjustable over a setting range (Δy) and with which the mixture ratio of hot to cold water can be varied in function of a target mixed water temperature (Tₛₒₗₗ) specifiable by a user, and having a sensor element (61) for detecting at least one setting position (y₁, y₂, y₃) in the setting range (Δy) of the thermostatic mixer valve (1), **characterized in that** the gear stage (15) has a non-rotatably mounted, linearly adjustable linear stroke element (17) provided between the electric motor (5) and the valve body (49) and that the sensor element (61) interacts with the linear stroke element (17) to detect the setting position (y₁, y₂, y₃).

2. The thermostatic mixer valve according to Claim 1, **characterized in that** the setting positions (y₁, y₂, y₃) detectable by the sensor element (61) are a lower setting position (y₁) and an upper setting position (y₂), which define the setting range (Δy) of the thermostatic mixer valve (1).

3. The thermostatic mixer valve according to Claim 1 or 2, **characterized in that** the size of the setting range (Δy) of the thermostatic mixer valve (1) is independent of the electric motor rotation angle traveled during the setting process and that the traveled rotation angle of the electric motor (5) is greater than 360° upon complete passage through the setting range (Δy).

4. The thermostatic mixer valve according to any one of Claims 1 to 3, **characterized in that** the gear stage (15) has drive spindle (13) of the electric motor (5) as an input element, which is drivingly connected to the linear stroke element (17), and that for forming the drive connection, the drive spindle (13) in particular has a male thread which is in engagement (19) with a radially outer female thread of the linear stroke element (17).

5. The thermostatic mixer valve according to any one of Claims 1 to 4, **characterized in that** the linear stroke element (17) is the output element of the gear stage (15), which acts in particular indirectly on the valve body (49).

6. The thermostatic mixer valve according to any one of the preceding claims, **characterized in that** an overload unit (39), which is elastically yielding when subjected to excessive force, and a thermostat element (47), in particular an expansion element, which is movement-coupled to the valve body (49), are series connected after the linear stroke element (17) in the force flow direction.

7. The thermostatic mixer valve according to Claim 6, **characterized in that** the overload unit (39) is configured as a cylinder with an end face (41) which faces the linear stroke element (17) and with which the linear stroke element (17) can be brought into abutment.

8. The thermostatic mixer valve according to Claim 6 or 7, **characterized in that** the overload unit (39), the thermostat element (47) and the valve body (49) are integrated in a housing (31) and form a first pre-assembly unit, and that the electric motor (5) and the control unit (7) and the linear stroke element (17) form a second pre-assembly unit (65), which is drivingly connected to the first pre-assembly unit in the assembled state.

9. The thermostatic mixer valve according to any one of the preceding claims, **characterized in that** the linear stroke element (17) has a signaler, essentially a radially projecting flag (29), which interacts with the sensor element (61).

10. The thermostatic mixer valve according to any one of the preceding claims, **characterized in that** the control unit (7) and the electric motor (5) of the thermostatic mixer valve (1) are integrated in a control loop (R) for adjusting the initial mixed water temperature (Tᵢₛₜ) to the user-specified target mixed water temperature (Tₛₒₗₗ).

## Revendications

1. Robinet mélangeur thermostatique, destiné à mélanger de l'eau froide et de l'eau chaude et à régler une température d'eau mélangée (Tᵢₛₜ), pourvu d'un moteur électrique (5) susceptible d'être amorcé par une unité de commande (7), qui par l'intermédiaire d'un étage de transmission (15) agit sur un corps de soupape à course réglable sur une plage de réglage (Δy), à l'aide duquel on peut faire varier la proportion de mélange entre l'eau chaude et l'eau froide en fonction d'une température de consigne (Tₛₒₗₗ) pour l'eau mélangée, prédéfinissable par l'utilisateur et pourvu d'un élément capteur (61), destiné à détecter au moins une position de réglage (y₁, y₂, y₃) dans la plage de réglage(Δy) du robinet mélangeur thermostatique (1), **caractérisé en ce que** l'étage de transmission (15) comporte un élément de course linéaire (17}, prévu entre le moteur électrique (5) et le corps de soupape (49), placé de manière solidaire en rotation, ajustable de manière linéaire et **en ce que** pour détecter la position de réglage (y₁, y₂, y₃), l'élément capteur (61) coopère avec l'élément de course linéaire (17) .

2. Robinet mélangeur thermostatique selon la revendication 1, **caractérisé en ce que** les positions de réglage (y₁, y₂ y₃) susceptibles d'être détectées par l'élément capteur (61) sont une position de réglage (y₁) inférieure et une position de réglage (y₂) supérieure qui définissent la plage de réglage (Δy) du robinet mélangeur thermostatique (1).

3. Robinet mélangeur thermostatique selon la revendication 1 ou 2, **caractérisé en ce que** la dimension de la plage de réglage (Δy) du robinet mélangeur thermostatique (1) est indépendante de l'angle de rotation du moteur électrique, parcouru pendant le processus de réglage et **en ce que** lors du passage complet de la plage de réglage (Δy), l'angle de rotation parcouru par le moteur électrique (5) est supérieur à 360 °.

4. Robinet mélangeur thermostatique selon l'une quelconque des revendications 1 à 3, **caractérisé en ce que** l'étage de transmission (15) comporte en tant qu'élément d'entrée une broche d'entraînement (13) du moteur électrique (5), qui est en liaison cinématique avec l'élément de course linéaire (17), et **en ce que** pour créer la liaison cinématique, notamment la broche d'entraînement (13) comporte un filetage, qui est en engagement (19) avec un taraudage extérieur en direction radiale de l'élément de course linéaire (17) .

5. Robinet mélangeur thermostatique selon l'une quelconque des revendications 1 à 4, **caractérisé en ce que** l'élément de course linéaire (17) est l'élément de sortie de l'étage de transmission {15) qui agit notamment indirectement sur le corps de soupape (49).

6. Robinet mélangeur thermostatique selon l'une quelconque des revendications précédentes, **caractérisé en ce que** dans la direction du flux de force, en aval de l'élément de course linéaire (17), en montage en série, suivent une unité de surcharge (39), qui lors de l'exercice d'une force excessive est élastiquement souple et un élément thermostatique (47), notamment un élément en matière extensible, qui est accouplé en déplacement avec le corps de soupape (49).

7. Robinet mélangeur thermostatique selon la revendication 6, **caractérisé en ce que** l'unité de surcharge (39) est conçue sous forme cylindrique avec une paroi frontale (41} faisant face à l'élément de course linéaire (17), avec laquelle l'élément de course linéaire (17) est susceptible d'être amené en appui.

8. Robinet mélangeur thermostatique selon la revendication 6 ou 7, **caractérisé en ce que** l'unité de surcharge (39), l'élément thermostatique {47) et le corps de soupape (49) sont regroupés dans un boîtier (31) et forment une première unité préfabriquée, et **en ce que** le moteur électrique (5) forme avec l'unité de commande (7) et l'élément de course linéaire (17) une deuxième unité préfabriquée (65), qui en position assemblée est en liaison cinématique avec la première unité préfabriquée.

9. Robinet mélangeur thermostatique selon l'une quelconque des revendications précédentes, **caractérisé en ce que** l'élément de course linéaire (17) comporte un générateur de signaux, par exemple un drapeau (29) faisant saillie en direction radiale, qui coopère avec l'élément capteur (61).

10. Robinet mélangeur thermostatique selon l'une quelconque des revendications précédentes, **caractérisé en ce que** l'unité de commande (7) et le moteur électrique (5) du robinet mélangeur thermostatique (1) sont intégrés dans un circuit de régulation (R), destiné à réguler la température réelle (Tᵢₛₜ) de l'eau mélangée à la température de consigne (Tₛₒₗₗ) de l'eau mélangée.
